# EUROPEAN PATENT SPECIFICATION

(11) **EP 1 587 362 B1**
(45) Date of publication and mention of the grant of the patent: **17.01.2007**
(21) Application number: 03779957.4
(22) Date of filing: 17.11.2003
(51) Int. Cl.: A01K 11/00

(54) **PROCEDURE FOR THE IDENTIFICATION AND MONITORING OF ANIMALS THROUGH THE USE OF ELECTRONIC IDENTIFICATION DEVICES (TRANSPONDERS)**
VERFAHREN ZUR IDENTIFIZIERUNG UND ÜBERWACHUNG VON TIEREN MITTELS VERWENDUNG VON ELEKTRONISCHEN IDENTIFIZIERUNGSVORRICHTUNGEN (TRANSPONDER)
PROCEDE POUR L'IDENTIFICATION ET LE SUIVI D'ANIMAUX GRACE A L'UTILISATION DE DISPOSITIFS D'IDENTIFICATION ELECTRONIQUES (TRANSPONDEURS)

(30) Priority: 25.11.2002 ES 200202695
(43) Date of publication of application: 26.10.2005
(73) Proprietor: Rumitag, S.L., 08950 Esplugues de Llobregat (ES)
(72) Inventor: CAJA LOPEZ, Gerardo, E-08190 Sant Cugat del Valles (ES); GARIN DE NARDO, Daniel, 11600 Montevideo (UY); HERNANDEZ-JOVER, Marta, E-43749 Garcia (ES); VILASECA VINTRO, Joan Francesc, E-08024 Barcelona (ES)
(74) Representative: SUGRANES - VERDONCES - FERREGÜELA
(86) International application number: PCT/EP2003/012840
(87) International publication number: WO 2004/047525

(56) References cited:
- FR-A- 2 776 165
- US-A- 4 787 384
- US-B1- 6 186 144

## Description

### Technical area of the invention

The invention relates to a procedure for the identification and monitoring of animals from birth until the end of their productive lives, especially designed to be used in domestic or wild animals that need to be monitored through the use of transponders.

The invention also relates to an applicator for the insertion of transponders inside the abdominal cavity of the animals, as well as a capsule with transponder capable of being used to carry out such procedure.

### Background of the invention

The use of transponders implanted in the bodies of animals has been common practice for some time. This practice enables the remote electronic identification and collection of information on the activities and physical condition of animals.

The existing background of the invention is based on the use of boluses or capsules of different materials in whose interior an electronic device (transponder) is placed and/or sensors that transmit information on the animal by means of different types of electromagnetic waves preferably through radiofrequency. The implantation of these transponders in animals enables the individual monitoring and control of each animal.

The current state of the art offers various documents which disclose the technology and different methods of use. Consequently, there are patents that are based on the subcutaneous or irregular placement of transponders. This is the case of the US 6186144 document which discloses a method of use and tool for the implantation or injection of a capsule with a transponder in its interior.

However, it has been shown that with injectable transponders, subcutaneous or intramuscular placement causes problems that are difficult to solve in practice, such as: animals being of a minimum age or size so that the injection area (ear, axilla, tail etc) is sufficiently developed; the need to use small size transponders (which limits reading distance) in order to reduce losses of the transponder in less developed injection areas; the appearance of occasional breakages as a consequence of traumatic events or crushing of the transponder, whether accidental or deliberate; the infection and formation of abscesses as a result of the introduction of skin tissues or foreign bodies during the injection of the transponder, with a change in the animal's health and necrosis of the injection area leading to the expulsion and loss of the transponder in the medium or short term; the migration to areas or body tissues different to those initially treated as a result of physical displacements during the time necessary to form a connective tissue capsule to immobilise the transponder in the area where it was injected; the difficulties and amount of time required to recover transponders subcutaneously or intramuscularly injected that has been observed in the slaughterhouse or in dead animals when the transponders have been subcutaneously or intramuscularly injected; and the possibility that the transponder or one of its fragments in case of operating failure or breakage might appear as contaminating waste in the flesh or in any of the edible parts of the animals' body.

As a result of all this, the use of injectable transponders, small sized ones by requirement, is not highly recommended for the raising of livestock as it reduces reading distance and efficiency in both static conditions as well as dynamic conditions and increases recovery times in the slaughterhouse.

Most of these problems have been solved in animals with compound stomachs, such as birds and ruminants by using transponders encapsulated in ceramic boluses as disclosed, amongst other documents, in US 4262623, WO 94/22295-A and WO 98/0125, where different embodiments and manufacturing procedures for these capsules are revealed. However, possibilities of application are exclusively limited to ruminants, pseudoruminants and some birds, since permanent retention of boluses and the transponder housed in their interior is possible as a result of the particular characteristics of the compound stomachs of ruminants (rumen/reticulum) and birds (crop-gizzard). Consequently, this system cannot be used in monogastric animals (pig, dog, cat, horse etc...) or in very small birds.

As a result, the lack of a general procedure for the placement of injectable transponders in all breeds of animals that is simple, safe and permits the application of medium or large-size transponders in all animals from birth, and that also enables a rapid and safe recovery of transponders after the death or slaughter of the animal in the slaughterhouse is apparent.

### Explanation of the invention

In order to provide a simultaneous solution to all these problems and drawbacks, a procedure is disclosed for the identification and remote monitoring of animals, particularly animals with a peritoneal cavity, through the use of electronic identification devices or transponders as well as a transponder applicator and a capsule with transponder to carry out said procedure.

In its essence, the procedure of the invention is characterised in that it comprises the following steps:
- inserting the transponder inside the peritoneal cavity of the animal;
- identifying and collecting information on the animal by means of sensors; and once the animal has been slaughtered,
- recovering the transponder through automated processes in the slaughtering lines of the slaughterhouses, from the processing of viscera or destruction of offal and animal remains.

In accordance with another characteristic of the invention, the recovery of transponders is achieved by magnetic attraction produced by magnets.

The insertion of the transponder inside the peritoneal cavity of the animal is achieved via an applicator that is equipped with a main hollow tubular body with an open end; a charge carrier, also hollow and tubular, adjusted for longitudinal displacement inside the main hollow body; a charge transfer array permanently connected to one end of the charge carrier and consisting of a hollow needle, equipped in its interior with a capsule that stores the transponder; and a rod adjusted for displacement inside the charge carrier and needle in order to push the capsule towards the exterior of the applicator, all this arranged in such a way that starting from the charge carrier's initial position, wherein the needle is completely housed inside the hollow body, the applicator is positioned with its open end on the surface of the animal's skin and the charge carrier is displaced towards the outlet of the applicator, as a result of which the needle penetrates inside the animal, and with the rod then being displaced inside the needle, the capsule becomes detached from the applicator and remains inside the animal's body, more specifically in its peritoneal cavity, and extracting finally the empty needle from the charge carrier, this is ready to receive a new charge transfer array, with capsule in its interior, at this point being able to recommence the process.

According to a preferred embodiment, the main hollow body of the applicator has a stop that limits the displacement of the charge carrier housed inside the main hollow body, and the position of the stop may be altered as desired, thereby selecting the magnitude of the stroke of the needle, adjusting this to the size and shape of the animal in which the transponder is to be inserted.

According to another characteristic of the invention, the charge transfer array of the applicator is adjusted in order to be screwed into the charge carrier.

According to one preferred embodiment, the main hollow body of the applicator has, at one of its ends, a length the pitch section of which is smaller than the one on its main length, since the charge carrier is equipped at one of its ends with an elastic security element, coaxial with the main hollow body and whose pitch section varies according to the section of the main hollow body housing it, and because the rod has at least one length whose section is greater than the size of the length designed to introduce it in the needle, all of this set out so that the larger section length of the rod can only be displaced within the interior of the charge carrier when the elastic security element is not in the smaller section length of the main hollow body.

The transponder's protective capsule to carry out the procedure of the invention is in its essence characterised in that it is equipped with a sheath or protective covering of shockproof, biocompatible plastic material and in that it comprises a ferrous mass capable of being detected and displaced by the forces of an external magnetic field.

In a variation of the invention, the capsule has at least one sharp end, adapted to facilitate the insertion of the capsule, puncturing the body of the animals by direct pressure of the operator on its opposite end.

According to one preferred embodiment, the capsule has on its outer surface, joggles or elements which project from its main profile enabling its adhesion to the digestive viscera of the animals.

### Brief description of the drawings

The attached drawings illustrate an animal standing on its four legs and, in a non-restrictive example, a preferred embodiment of the transponder applicator device. In these drawings,
Fig 1 is a cross-sectional view of an animal standing on four legs;
Fig 2 is a cross-sectional view of an embodiment of a transponder applicator ready to be used;
Fig 3 is a cross-sectional view of the transponder applicator in a position after release;
Fig 4 is a cross-sectional view of the transponder applicator at the moment when a capsule becomes housed inside the animal; and
Fig 5 is a cross-sectional view of the transponder applicator in a position appropriate to change the needle.

### Detailed description of the drawings

In order to carry out remote monitoring and the identification of animals according to the invention, the placement of a transponder in the intraperitoneal cavity of the animal in question is required.

The use of the intraperitoneal cavity as an area for placement of transponders is very advantageous with respect to alternatives known up to now, since it increases the retention capacity of the transponder in the body of all breeds of animals, enables its implantation from birth and simplifies recovery tasks after the slaughter and death of the animal.

In order to carry out such procedure, any transponder available in the market may be used, adjusting it for its insertion in the charge transfer array (8) designed for such effect.

Transponders currently used for animal identification are cylindrical in shape and between 5 and 50mm in length and 1 to 5mm in diameter.

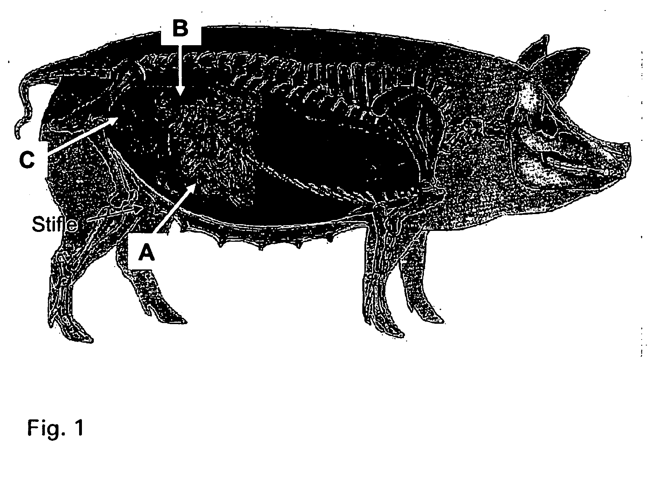

Animals to be identified, according to age and size, are immobilised and injected with a transponder after local disinfection of the area to be injected by means of an vaporiser with an iodine solution or similar, using the following procedures:
a) Animal lying down: In supine position (for young or small animals): With the animal on its back and with the extremities extended and tightly secured. The injection will always be made on the left side of the animal, in the ventral part of the abdomen, 2cm from the median line (linea alba) and around 2-8cm (depending on the size of the animal) from the umbilical scar in the direction towards the tail, so that the transponder ends up placed between the small intestinal loops.
b) Animal suspended: In a suspended position (for small, young animals and those of limited mobility): With the animal held by its rear extremities, with the body hanging and the front extremities extended without touching any object so that the digestive viscera fall across the caudal part of the abdominal cavity and leave space in the diaphragm region. The injection will be made similar to the one revealed for the supine position.
c) Animal standing: On its four legs (for adult or heavy animals, illustrated in Fig 1): With the animal supported on its four legs and immobilised by holding the head or being placed in a shoeing frame. The intraperitoneal insertion of the transponder may be achieved by means of different injection procedures:
   - Side injection (A): Recommended procedure and easiest application in the majority of adult animals. To make the injection the animal will be held by the bend in the stifle before proceeding to inject the transponder in the lower part of the flank or left side of the animal, close to the front extremity and approximately some 20cm from the last floating rib. Getting too close to the udder or the mammary glands on the ventral side should be avoided and, in animals with a mammary chain (pigs...), the injection will be made above the mammary chain in order to avoid the mammary vascular system. The transponder will be placed in the ventral abdomen, next to the large intestine.
   - Lumbar injection (B): In thin animals or those with very little dorsal fat (cows, sheep and goats), it is possible to carry out an intraperitoneal injection in the flank or in the flank fossa in the lumbar region, approximately 10cm from the transverse process of the lumbar vertebrae in a parallel direction to the rachis and perpendicular to the floor. The transponder will be placed between the first loops of the small intestine (duodenum) or the small colon.
   - Anal injection (C): Access to the intraperitoneal cavity will be achieved with a side injection through the left rectum wall. The transponder will be placed between the final loops of the large intestine and above the urinary bladder.

An appropriate applicator to carry out the procedure disclosed is of particular importance as it enables, with maximum precission, the placement of the transponder in the appropriate area and depending on the characteristics of the animal, this is realised either automatically or manually.

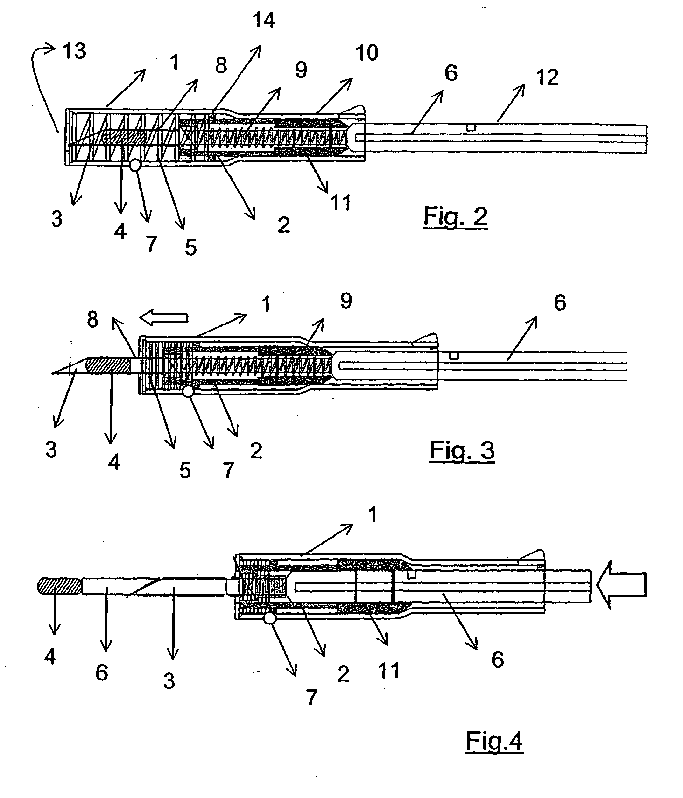

Consequently, Fig 2 shows a preferred embodiment of an applicator, especially applicable for the placement of transponders in the peritoneal cavity of the animals, in a position ready for the injection of the capsule 4 with a transponder in its interior.

The applicator of the figure comprises a main hollow tubular body 1, preferably cylindrical in shape, equipped at one of its ends with a length 10 whose pitch section is smaller than that of the main length. The main hollow tubular body 1 also has a charge carrier 2 in its interior, adjusted for longitudinal displacement in the main body 1.

The stroke of the charge carrier 2 is restricted by the opening 13 and the beginning of the length 10 as the pitch section of both ends is less than the width of the crown 14 joined to the charge carrier 2.

A charge transfer array 8 which comprises a hollow needle 3 that stores in its interior a capsule 4 with transponder is coupled to one end of the charge carrier 2. The charge transfer array 8 is permanently coupled to the charge carrier 2 so that different charge transfer arrays can be coupled according to application needs. As a result, the needles can be changed once used, the size of the needle 3 can be varied and different types of transponders may be injected. In the example of the figures, the charge transfer array 8 is screwed to the charge carrier 2, better enabling the extraction or change of the charge transfer array 8.

In Fig 2, the applicator is ready to be used in such a way that the charge transfer array 2 is placed in a position where the needle 3 does not overhang the main body 1, thereby preventing the needle from causing any unwanted prick or injuring any person or animal during its handling. When the charge carrier 2 is in this position, the elastic element 5 is tense, so if the carrier is not secured to the main body 1 of the applicator, the elastic element 5 will displace the carrier and the needle towards the exterior, passing through the skin and penetrating the animal's interior at a distance previously determined by the user, always and whenever the applicator is positioned on the surface of the animal's body.

In order to select the appropriate penetration distance of the needle, the tubular body 1 has a stop 7 which limits the displacement of the charge carrier 2.

The role of the elastic element 5 is very important as it provides the required force for the displacement of the charge carrier (2) to exert the necessary force for the needle (3) to pass through the animal's skin and penetrate its interior. This therefore prevents any manual displacement of the charge carrier (2) resulting insufficient in penetrating the animal's skin, or hurting the animal.

On the same surface of the main body 1, and visible from the exterior, it can be shown, by way of guidance, the most suitable position of the stop 7 in order to inject transponders in different animals according to age, size or breed, thereby facilitating its use for people not expert in this subject matter. Consequently, the injection of transponders would be possible without the need to resort to the intervention of a practitioner or highly qualified technical person.

The limitation of displacement of the carrier 2, besides permitting a variation in the penetration of the needle 3 in the animal, acts as an element of control in the penetration distance, assuring the intestines of the animal are not punctured.

When the applicator is in the Fig 2 position, the elastic security element 11, positioned at the end of the charge carrier 2, prevents displacement of the rod 6 in the direction of the needle 3 as the pitch section of the elastic security element 11 is smaller than the length 12 of the rod 6, thereby preventing any accidental insertion of the rod 6 in the needle 3, releasing the capsule 4.

Figs 3 and 4 show an applicator in position after release or once the carrier 2, and as a result the needle 3, have been displaced longitudinally and the needle has penetrated the interior of the peritoneal cavity of the animal. When the needle 3 is in such position, the charge carrier 2 has been displaced in such a way that the elastic security element 11 enables the passage, through it, of the length 12 of the rod 6. Upon pressing the rod 6, as indicated by the arrow in Fig 4, this becomes introduced into the interior of the needle 3 and pushes the capsule 4 stored in its interior towards the exterior of the needle 3, placing it in the peritoneal cavity of the animal.

In the embodiment illustrated in the drawings, an elastic element 9 serves as a connection between the rod 6 and the charge carrier 2, so that in resting position and without exerting any force on the rod (Fig 3), this does not become introduced into the needle 3. After exerting force on the rod 6 (Fig 4), introducing it into the needle 3, this would then return to its resting position as shown in Fig 3.

According to another embodiment, and in the event of wanting to activate the charge carrier 2 manually, the opposite of the previous case, when the applicator is in the position illustrated in Fig 2, the elastic element 5 is not tense, so that in order to insert the needle 3 in the animal, it is necessary to displace the rod 6 in the direction indicated by the arrow in Fig 4, which at the same time will displace the charge carrier 2, as these remain coupled due to the pressure that the elastic security element 11 exerts on the rod 6.

As in the previous case, when the charge carrier 2 has displaced sufficiently the elastic element 11, which is already in the main length of the main hollow tubular body 1, it will refrain from exerting pressure on the rod 6, in such a way that this will be displaced within its interior and the interior of the needle 3 until depositing the capsule 4 inside the animal.

According to this embodiment, the size of the charge carrier should be adjusted to the size or breed of animal, thereby controlling the stroke of the needle as required.

After ceasing to exert force on the rod 6, the tension of the elastic element 5 will displace the charge carrier to the position in Fig 2, returning to its resting position so that the needle finishes up completely hidden within the main hollow body 1, and avoiding possible damage to the user or animal.

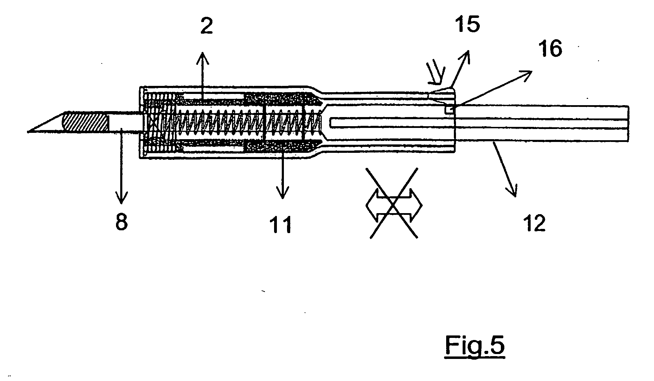

Irrespective of the embodiment, once the capsule 4 is deposited inside the animal, the charge transfer array 8 should be changed in order to recommence the process. In order to carry out such an operation, with the applicator in the position in Fig 5, button 15 is pressed, which is positioned on the length 10 of the main hollow body 1, so that this activates at least one joggle 16 positioned on the length 12 of the rod 6, thereby preventing its displacement and fixing it in this position. As a result, the charge carrier 2 also stays fixed in its position, since the elastic security element 11 cannot be introduced into the length 10 of the main hollow body 1, while the length 12 of the rod 6 occupies this space. Hence, the needle 3 is able to thread itself without difficulty onto the charge carrier 2, as this remains fixed and without any displacement whatsoever.

To complement the procedure, the capsule 4, within which the transponder is stored, is equipped with a sheath or protective covering of shockproof, biocompatible plastic material, which forms a fine protective layer around the capsule storing the transponder. The objective of this layer is to protect the transponder from knocks or damage that may lead to its accidental breakage and avoid, in case of breakage, any piece or component of the transponder or its capsule becoming dispersed inside the animals' body or flesh.

This protective sheath may also be made out of rigid material and/or have a sharp end in order to be used directly as an injection device, making in such case the use of needles unnecessary. The design of the sheath may also include joggles and complementary elements, such as grooves, rings, threads or tapes, which facilitate its adhesion to laminas of connective tissue (mediastinum) which surround and join the intestines and digestive viscera of the animals.

The transponder array and the sheath or protective capsule comprise a ferrous mass capable of being detected and displaced by the forces of an external magnetic field, thereby making possible the application of an automatic recovery procedure of the transponders based on the use of magnets once the animals have been slaughtered or are dead. For this, one or various magnets must be placed in those elements or on surfaces that come into contact with the digestive viscera and/or its content once removed from the interior of the body of the animals. In cases where the protective capsule of the identifying device has become attached to the viscera, these magnets will be placed in the cleaning areas and treated.

## Claims

1. Procedure for the identification and remote monitoring of animals, through the use of electronic identification devices or transponders, **characterised in that** it comprises:
a) inserting the transponder inside the peritoneal cavity of the animal;
b) identifying and collecting information on the animal by means of sensors; and once the animal has been slaughtered,
c) recovering the transponder through automated processes in the slaughtering lines of the slaughterhouses, from the processing of viscera or destruction of offal and animal remains.

2. Procedure as claimed in claim 1, **characterised in that** the recovery of the transponders is produced by magnetic attraction exerted by magnets.

3. Procedure as claimed in claim 1, **characterised in that** the insertion of the transponder inside the peritoneal cavity of the animal is achieved via an applicator equipped with a main hollow tubular body (1) with an open end; a charge carrier (2), also hollow and tubular, adjusted for longitudinal displacement inside the body (1); a charge transfer array (8) permanently connected to one end of the charge carrier (2) and consisting of a hollow needle (3), equipped in its interior with a capsule (4) that stores the transponder; and a rod (6) adjusted for displacement inside the charge carrier (2) and needle (3) in order to push the capsule (4) towards the exterior of the applicator, all this arranged in such a way that starting from the initial position of the charge carrier (2), wherein the needle (3) is completely housed inside the hollow body (1), the applicator is positioned with its open end on the surface of the animal's skin and the charge carrier (2) is displaced towards the outlet of the applicator, as a result of which the needle (3) penetrates the inside the animal, and with the rod (6) then being displaced within the interior of the needle (3), the capsule (4) becomes detached from the applicator and remains inside the animal's body, more specifically in its peritoneal cavity, and extracting finally the empty needle (3) from the charge carrier (2), this is then ready to receive a new charge transfer array (8), with capsule (4) in its interior, at this point being able to recommence the process.

4. Procedure as claimed in claim 3, **characterised in that** the main hollow body (1) of the applicator has a stop (7) that limits the displacement of the charge carrier (2) housed inside the main body, and **in that** the position of the stop (7) may be altered as desired, thereby selecting the magnitude of the stroke of the needle (3), adjusting this to the size and shape of the animal in which the transponder is to be inserted.

5. Procedure as claimed in claims 3 and 4, **characterised in that** the charge transfer array (8) of the applicator is adjusted in order to be screwed in to the charge carrier (2).

6. Procedure as claimed in claims 3, 4 and 5, **characterised in that** the main hollow body (1) of the applicator has, at one of its ends, a length (10) the pitch section of which is smaller than the one on its main length, since the charge carrier (2) is equipped at one of its ends with an elastic security element (11), coaxial with the main hollow body (1) and whose pitch section varies according to the section of the main hollow body (1) housing it, and because the rod (6) has at least one length (12) whose section is greater than the size of the length designed to introduce it in the needle (3), all of this set out so that the length (12) of the rod (6) can only be displaced within the interior of the charge carrier (2) when the elastic security element (11) is not in the length (10) of the main hollow body (1).

7. Procedure as claimed in claims 1 and 2 **characterised in that** the transponder is introduced into a capsule (4) that it is equipped with a sheath or protective covering of shockproof, biocompatible plastic material, and **in that** the capsule (4) comprises a ferrous mass capable of being detected and displaced by the forces of an external magnetic field.

8. Procedure as claimed in claim 7 **characterised in that** the capsule (4) has at least one sharp end, adjusted to facilitate the insertion of the capsule, puncturing the body of the animals by direct pressure of the operator on its opposite end.

9. Procedure as claimed in claim 7 **characterised in that** the capsule (4) has on its outer surface, joggles or elements which project from its main profile enabling its adhesion to the digestive viscera of the animals.

## Patentansprüche

1. Verfahren zur Identifizierung und Fernüberwachung von Tieren mittels Verwendung von elektronischen Identifizierungsvorrichtungen oder Transpondern, **dadurch gekennzeichnet, daß** es umfaßt:
a) Einführen des Transponders in das Innere der Bauchhöhle des Tiers;
b) Identifizieren und Sammeln von Information in Bezug auf das Tier mit Hilfe von Sensoren;
und wenn das Tier geschlachtet wurde,
c) Wiedererlangen des Transponders über automatisierte Prozesse in den Schlachtstraßen der Schlachthäuser aus der Verarbeitung des Organs oder der Zerstörung von Fleischabfall und Tierresten.

2. Verfahren nach Anspruch 1, **dadurch gekennzeichnet, daß** die Wiedererlangung der Transponder durch magnetische Anziehung erfolgt, die ausgeübt wird von Magneten.

3. Verfahren nach Anspruch 1, **dadurch gekennzeichnet, daß** das Einführen des Transponders in das Innere der Bauchhöhle des Tiers erreicht wird über einen Applikator, der ausgestattet ist mit einem hohlen, rohrförmigen Hauptkörper (1) mit einem offenen Ende; ein ebenfalls hohler und rohrförmiger Ladungsträger (2) eingestellt ist für einen Versatz im Inneren des Körpers (1) in Längsrichtung; eine Ladungstransportanordnung (8) permanent mit einem Ende des Ladungsträgers (2) verbunden ist und aus einer hohlen Nadel (3) besteht, die in ihrem Inneren mit einer Kapsel (4) ausgestattet ist, welche den Transponder lagert; und eine Stange (6) eingestellt ist zum Versatz im Inneren des Ladungsträgers (2) und der Nadel (3), um die Kapsel (4) in Richtung nach außerhalb des Applikators zu schieben, wobei dies alles derart angeordnet ist, das ausgehend von der anfänglichen Position des Ladungsträgers (2), bei welcher die Nadel (3) vollständig im Inneren des hohlen Körpers (1) aufgenommen ist, der Applikator mit seinem offenen Ende auf der Oberfläche der Haut des Tieres angeordnet ist und der Ladungsträger (2) in Richtung des Auslasses des Applikators versetzt wird, als Folge dessen die Nadel (3) das Tier nach Innen hin durchdringt und die Stange (6) dann im Inneren der Nadel (3) versetzt wird, wobei die Kapsel (4) gelöst wird von dem Applikator und im Inneren des Körpers des Tiers verbleibt, spezieller, in dessen Bauchhöhle und schließlich Abziehen der leeren Nadel (3) von dem Ladungsträger (2), wobei diese dann bereit ist, um eine neue Ladungstransportanordnung (8) aufzunehmen, wobei eine Kapsel (4) in ihrem Inneren ist und wobei an dieser Stelle mit dem Vorgang wieder begonnen werden kann.

4. Verfahren nach Anspruch 3, **dadurch gekennzeichnet, daß** der hohle Hauptkörper (1) des Applikators einen Anschlag (7) hat, welcher den Versatz des im Inneren des Hauptkörpers aufgenommenen Ladungsträgers (2) einschränkt und daß die Position des Anschlags (7) je nach Wunsch geändert werden kann, wodurch die Länge des Hubs der Nadel (3) wählbar ist und dieser eingestellt ist auf die Größe und Gestalt des Tieres, in das der Transponder einzusetzen ist.

5. Verfahren nach Ansprüchen 3 und 4, **dadurch gekennzeichnet, daß** die Ladungstransportanordnung (8) des Applikators ausgelegt wird, um in den Ladungsträger (2) eingeschraubt zu werden.

6. Verfahren nach Ansprüchen 3, 4 und 5, **dadurch gekennzeichnet, daß** der hohle Hauptkörper (1) des Applikators an einem seiner Enden eine Länge (10) hat, deren Abstandsbereich kleiner ist als der seiner Hauptlänge, da der Ladungsträger (2) an einem seiner Enden mit einem elastischen Sicherungselement (11), ausgestattet ist, das koaxial zu dem hohlen Hauptkörper (1) ist und dessen Abstandsbereich sich entsprechend dem ihn aufnehmenden Abschnitt des hohlen Hauptkörpers (1) ändert und da die Stange (6) wenigstens eine Länge (12) hat, deren Abschnitt größer ist als die Größe der Länge, die ausgestaltet ist, um sie in die Nadel (3) einzuführen und all dies so aufgebaut ist, daß die Länge (12) der Stange (6) nur dann innerhalb des Inneren des Ladungsträgers (2) versetzbar ist, wenn das elastische Sicherungselement (11) nicht in der Länge (10) des hohlen Hauptkörpers (1) ist.

7. Verfahren nach Anspruch 1 und 2, **dadurch gekennzeichnet, daß** der Transponder in eine Kapsel (4) eingeführt wird, die mit einer Hülle oder Schutzabdeckung aus stoßfestem, biokompatiblen Kunststoffmaterial ausgestattet ist und daß die Kapsel (4) eine eisenhaltige Masse umfaßt, die erfaßt und durch die Kräfte eines externen Magnetfelds versetzt werden kann.

8. Verfahren nach Anspruch 7, **dadurch gekennzeichnet, daß** die Kapsel (4) wenigstens ein spitzes Ende hat, das ausgelegt ist, um das Einführen.der Kapsel zu vereinfachen und den Körper der Tiere durch einen direkten Druck des Operateurs auf sein entgegengesetztes Ende durchsticht.

9. Verfahren nach Anspruch 7, **dadurch gekennzeichnet, daß** die Kapsel (4) an ihrer Außenoberfläche Ausnehmungen oder Elemente hat, die von seinem Hauptprofil vorstehen und ihr Anhaften an dem Verdauungsorgan der Tiere ermöglichen.

## Revendications

1. Procédé d'identification et de surveillance à distance d'animaux, par utilisation de dispositifs ou de transpondeurs d'identification électroniques, **caractérisé en ce qu'**il comprend:
a) l'insertion du transpondeur à l'intérieur de la cavité péritonéale de l'animal;
b) l'identification et la collecte d'information concernant l'animal, à l'aide de capteurs et une fois que l'animal a été abattu;
c) récupération du transpondeur par des processus automatisés, dans les lignes d'abattage des abattoirs, à partir du traitement des viscères ou de la destruction des abats et des restes animaux.

2. Procédé tel que revendiqué à la revendication 1, **caractérisé en ce que** la récupération des transpondeurs est effectuée sous l'effet de l'attraction magnétique exercée par des aimants.

3. Procédé tel que revendiqué à la revendication 1, **caractérisé en ce que** l'insertion du transpondeur à l'intérieur de la cavité péritonéale de l'animal est obtenue via un applicateur équipé d'un corps principal (1) tubulaire creux ayant une extrémité ouverte; un support de charge (2) également creux et tubulaire, ajusté pour permettre un déplacement longitudinal à l'intérieur du corps (1); un groupe de transfert de charge (8) connecté en permanence à une extrémité du support de charge (2) et composé d'une aiguille (3) creuse, équipée intérieurement d'une capsule (4) qui stocke le transpondeur; et d'une tige (6) ajustée pour permettre un déplacement à l'intérieur du support de charge (2) et de l'aiguille (3), pour pousser la capsule (4) vers l'extérieur de l'applicateur, tout ceci étant agencé de telle manière que, en commençant de la position initiale du support de charge (2), dans lequel l'aiguille (3) est complètement logée à l'intérieur du corps (1) creux, l'applicateur soit positionné avec son extrémité ouverte sur la surface de la peau de l'animal, et que le support de charge (2) soit déplacé vers la sortie de l'applicateur, en résultat de quoi l'aiguille (3) pénètre à l'intérieur de l'animal, et la tige (6) est ensuite déplacée à l'intérieur de l'aiguille (3), la capsule (4) étant détachée de l'applicateur et restant à l'intérieur du corps de l'animal, plus spécifiquement dans sa cavité péritonéale, et l'extraction finale de l'aiguille (3) vide du support de charge (2), c'est-à-dire ensuite prêt à recevoir un nouveau groupe de transfert de charge (8), la capsule (4) étant placée à l'intérieur, à ce point étant en mesure de recommencer le processus.

4. Procédé tel que revendiqué à la revendication 3, **caractérisé en ce que** le corps principal (1) creux de l'applicateur présente une butée (7) limitant le déplacement du support de charge (2) logé à l'intérieur du corps principal, et **en ce que** la position de la butée (7) peut être modifiée de la façon souhaitée, de manière à sélectionner l'ampleur de la course de déplacement de l'aiguille (3), en l'adaptant à la taille et à la forme de l'animal dans lequel le transpondeur doit être inséré.

5. Procédé tel que revendiqué aux revendications 3 et 4, **caractérisé en ce que** le groupe de transfert de charge (8) de l'applicateur est adapté pour être vissé dans le support de charge (2).

6. Procédé tel que revendiqué aux revendications 3, 4 et 5, **caractérisé en ce que** le corps principal (1) creux de l'applicateur présente à une de ses extrémités une longueur (10) dont la section primitive est plus petite que celle qu'il a sur sa longueur principale, étant donné que le support de charge (2) est équipé à une de ses extrémités d'un élément de sécurité (11) élastique, coaxial au corps principal (1) creux et dont la section primitive varie selon la section du corps principal (1) creux le logeant, et du fait que la tige (6) présente au moins une longueur (12) dont la section est plus grande que la taille de la longueur conçue pour l'introduire dans l'aiguille (3), tout ceci de manière que la longueur (12) de la tige (6) puisse être uniquement déplacée à l'intérieur du support de charge (2) lorsque l'élément de sécurité (11) élastique n'est pas dans la longueur (10) du corps principal (1) creux.

7. Procédé tel que revendiqué aux revendications 1 et 2, **caractérisé en ce que** le transpondeur est introduit dans une capsule (4) équipée d'une gaine ou d'une couverture protectrice en matière synthétique biocompatible résistant au choc, et **en ce que** la capsule (4) comprend une masse ferreuse, capable d'être détectée et déplacée par les forces exercées par un champ magnétique externe.

8. Procédé tel que revendiqué à la revendication 7, **caractérisé en ce que** la capsule (4) présente au moins une extrémité à angle vif, ajustée pour faciliter l'insertion de la capsule, en perforant le corps des animaux par application d'une pression directe de l'opérateur sur son extrémité opposée.

9. Procédé tel que revendiqué à la revendication 7, **caractérisé en ce que** la capsule (4) a sur sa surface extérieure des ergots ou des éléments faisant saillie de son profil principal, permettant son adhésion aux viscères digestifs des animaux.
